# EUROPEAN PATENT APPLICATION

(11) **EP 4 486 035 A1**
(43) Date of publication of application: **01.01.2025**
(21) Application number: 23759729.9
(22) Date of filing: 10.02.2023
(51) Int. Cl.: H04W 72/0457, H04B 7/06, H04B 7/08, H04W 16/28

(54) **TERMINAL, RADIO COMMUNICATION METHOD, AND BASE STATION**

(30) Priority: 24.02.2022 JP 2022027218
(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/004632
(87) International publication number: WO 2023/162725

(57) **Abstract**

A terminal according to one aspect of the present disclosure includes a receiving section that receives one or more transmission configuration indication (TCI) state lists for at least one of downlink and uplink in one or more cells of a plurality of cells, receives at least one of a list of first cells for indication of one or more TCI states in the one or more TCI state lists and a list of second cells for reference to one of the one or more TCI state lists, and receives the indication, and a control section that applies the one or more TCI states to a part or all of the plurality of cells, based on at least one of the list of first cells and the list of second cells. According to one aspect of the present disclosure, it is possible to appropriately determine a TCI state for a plurality of cells/CCs.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation).

It is studied that a configured/activated/indicated TCI state is applied to a plurality of types of signals (channels/RSs). However, a study has not been sufficiently performed with respect to a method for applying/determining a TCI state for a plurality of cells / component carriers (CCs). Unless the method is appropriate, degradation in communication quality, throughput reduction, and the like may occur.

Thus, an object of the present disclosure is to provide a terminal, a radio communication method, and a base station that appropriately determine a TCI state for a plurality of cells/CCs. Solution to Problem

A terminal according to one aspect of the present disclosure includes a receiving section that receives one or more transmission configuration indication (TCI) state lists for at least one of downlink and uplink in one or more cells of a plurality of cells, receives at least one of a list of first cells for indication of one or more TCI states in the one or more TCI state lists and a list of second cells for reference to one of the one or more TCI state lists, and receives the indication, and a control section that applies the one or more TCI states to a part or all of the plurality of cells, based on at least one of the list of first cells and the list of second cells.

### Advantageous Effects of Invention

According to one aspect of the present disclosure, it is possible to appropriately determine a TCI state for a plurality of cells/CCs.

### Brief Description of Drawings

[FIG. 1] FIG. 1 is a diagram to show an example of simultaneous beam update over a plurality of CCs.
[FIG. 2] FIGS. 2A and 2B are diagrams to show examples of a unified/common TCI framework.
[FIG. 3] FIGS. 3A and 3B are diagrams to show examples of a CC-specific TCI state pool and a CC-common TCI state pool.
[FIG. 4] FIG. 4 is a diagram to show an example of CC list configuration according to Aspect 1-B.
[FIG. 5] FIG. 5 is a diagram to show another example of the CC list configuration according to Aspect 1-B.
[FIG. 6] FIG. 6 is a diagram to show an example of CC list configuration in Case 1 according to variations of a first embodiment.
[FIG. 7] FIG. 7 is a diagram to show another example of the CC list configuration in Case 1 according to the variations of the first embodiment.
[FIG. 8] FIG. 8 is a diagram to show an example of the CC list configuration in Case 2 according to the variations of the first embodiment.
[FIG. 9] FIG. 9 is a diagram to show another example of the CC list configuration in Case 2 according to the variations of the first embodiment.
[FIG. 10] FIG. 10 is a diagram to show an example of beam indication according to a third embodiment.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have a different parameter(s) (or a parameter set(s)) that can be assumed to be the same, and such parameters (which may be referred to as QCL parameters) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Simultaneous Beam Update of Plurality of CCs)

In Rel. 16, one MAC CE can update beam indices (TCI states) of a plurality of CCs.

The UE can be configured with up to two applicable CC lists (for example, applicable-CC-list) by RRC. When two applicable CC lists are configured, the two applicable CC lists may correspond to inter-band CA in FR1 and inter-band CA in FR2.

A network may activate and deactivate, by transmitting a TCI states activation/deactivation for UE-specific PDSCH MAC CE, configured TCI states in a serving cell or a set of serving cells configured in simultaneous TCI update list 1 (simultaneousTCI-UpdateList1) or simultaneous TCI update list 2 (simultaneousTCI-UpdateList2). If an indicated serving cell is configured as part of simultaneous TCI update list 1 or simultaneous TCI update list 2, the MAC CE is applied to all the serving cells configured in a set of simultaneous TCI update lists 1 or simultaneous TCI update lists 2.

The network may indicate, by transmitting a TCI states indication for UE-specific PDCCH MAC CE, configured TCI states in a serving cell or a set of serving cells configured in simultaneous TCI update list 1 (simultaneousTCI-UpdateList1) or simultaneous TCI update list 2 (simultaneousTCI-UpdateList2). If an indicated serving cell is configured as part of simultaneous TCI update list 1 or simultaneous TCI update list 2, the MAC CE is applied to all the serving cells configured in a set of simultaneous TCI update lists 1 or simultaneous TCI update lists 2.

An activation MAC CE for a TCI state of a PDCCH activates TCI states associated with the same CORESET ID in all the BWPs/CCs in an applicable CC list.

An activation MAC CE for a TCI state of a PDSCH activates TCI states in all the BWPs/CCs in the applicable CC list.

An activation MAC CE for a spatial relation of an A-SRS/SP-SRS activates spatial relations associated with the same SRS resource ID in all the BWPs/CCs in the applicable CC list.

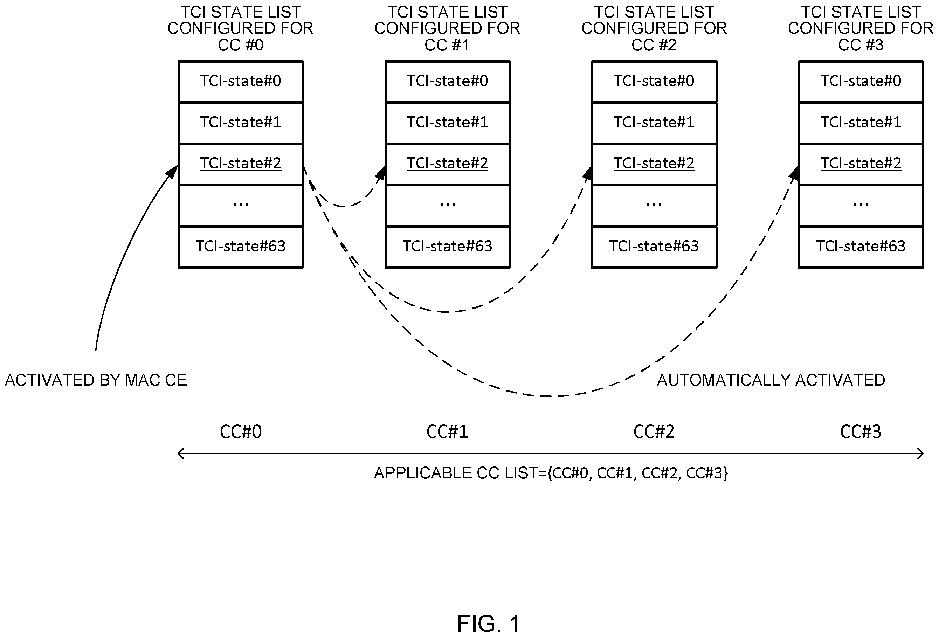

In the example in FIG. 1, the UE is configured with an applicable CC list indicating CCs #0, #1, #2, and #3 and a list indicating 64 TCI states for a CORESET or a PDSCH in each of the CCs. When one TCI state in CC #0 is activated by a MAC CE, corresponding TCI states are activated in CCs #1, #2, and #3.

It is studied that such simultaneous beam update is applicable only to a single-TRP case.

For a PDSCH, the UE may be based on Procedure A below.

### {Procedure A}

The UE receives an activation command for mapping up to eight TCI states to a codepoint in a DCI field (TCI field) in one CC / DL BWP or in one set of CCs/BWPs. When one set of TCI state IDs is activated for one set of CCs / DL BWPs, an applicable CC list is determined by a CC(s) indicated in an activation command, and a set of TCI states being the same is applied to all the DL BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the one set of TCI state IDs can be activated for one set of CCs / DL BWPs.

For a PDCCH, the UE may be based on Procedure B below.

### {Procedure B}

If the UE is provided with up to two lists of cells for simultaneous TCI state activation by a simultaneous TCI update list (at least one of simultaneousTCI-UpdateList-r16 and simultaneousTCI-UpdateListSecond-r16), by a simultaneous TCI cell list (simultaneousTCI-CellList), the UE applies, to CORESETs with an index p in all the configured DL BWPs in all the configured cells in one list determined based on a serving cell index provided by a MAC CE command, an antenna port quasi co-location (QCL) provided by TCI states with the same activated TCI state ID value. Only if the UE is not provided with a plurality of different values of CORESET pool indices (CORESETPoolIndex) in a CORESET information element (ControlResourceSet) and is not provided with at least one TCI codepoint mapped to two TCI states, the UE can be provided with a simultaneous TCI cell list for simultaneous TCI state activation.

For a semi-persistent (SP) / aperiodic (AP)-SRS, the UE may be based on Procedure C below.

### {Procedure C}

When an SP configured by an SRS resource information element (higher layer parameter SRS-Resource) or spatial relation information (spatialRelationInfo) for an AP-SRS resource is activated/updated by a MAC CE for one set of CCs/BWPs, an applicable CC list is indicated by a simultaneous spatial update list (higher layer parameter simultaneousSpatial-UpdateList-r16 or simultaneousSpatial-UpdateListSecond-r16), and the spatial relation information is applied to SPs or AP-SRS resources with the same SRS resource ID in all the BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the SP configured by the SRS resource information element (higher layer parameter SRS-Resource) or spatial relation information (spatialRelationInfo) for the AP-SRS resource is activated/updated by an MAC CE for the one set of CCs/BWPs.

The simultaneous TCI cell list (simultaneousTCI-CellList) and simultaneous TCI update lists (at least one of simultaneousTCI-UpdateList1-r16 and simultaneousTCI-UpdateList2-r16) are lists of serving cells for which a TCI relationship can be updated simultaneously by using a MAC CE. simultaneousTCI-UpdateList1-r16 and simultaneousTCI-UpdateList2-r16 do not include the same serving cell.

The simultaneous spatial update list (at least one of higher layer parameters simultaneousSpatial-UpdatedList1-r16 and simultaneousSpatial-UpdatedList2-r16) is a list of serving cells for which a spatial relationship can be updated simultaneously by using a MAC CE. simultaneousSpatial-UpdatedList1-r16 and simultaneousSpatial-UpdatedList2-r16 do not include the same serving cell.

Here, the simultaneous TCI update lists and the simultaneous spatial update lists are configured by RRC, a CORESET pool index of a CORESET is configured by RRC, and a TCI codepoint mapped to TCI state(s) is indicated by a MAC CE.

In the present disclosure, a CC list, a new CC list, a simultaneous TCI cell list, simultaneousTCI-CellList, a simultaneous TCI update list, simultaneousTCI-UpdateList1-r16, simultaneousTCI-UpdateList2-r16, a simultaneous spatial updated list, simultaneousSpatial-UpdatedList1-r16, and simultaneousSpatial-UpdatedList2-r16 may be interchangeably interpreted.

In the present disclosure, simultaneousTCI-UpdateList1, simultaneousTCI-UpdateList1-r16, and simultaneousTCI-UpdateList-r16 may be interchangeably interpreted. In the present disclosure, simultaneousTCI-UpdateList2, simultaneousTCI-UpdateList2-r16, and simultaneousTCI-UpdateListSecond-r16 may be interchangeably interpreted.

In the present disclosure, simultaneousSpatial-UpdatedList1, simultaneousSpatial-UpdatedList1-r16, and simultaneousSpatial-UpdateList-r16 may be interchangeably interpreted. In the present disclosure, simultaneousSpatial-UpdatedList2, simultaneousSpatial-UpdatedList2-r16, and simultaneousSpatial-UpdateListSecond-r16 may be interchangeably interpreted.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling / physical layer signaling.

In the present disclosure, description "N = M = X (X is an arbitrary integer)" may mean that X TCI states (joint TCI states) (corresponding to X TRPs) common to UL and DL are notified/configured/indicated for the UE. Description "N = X (X is an arbitrary integer), M = Y (Y is an arbitrary integer, Y may be equal to X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that, in the above examples, cases where N and M values are 1 or 2 are described, but the N and M values may be 3 or greater, and N and M may be different from each other.

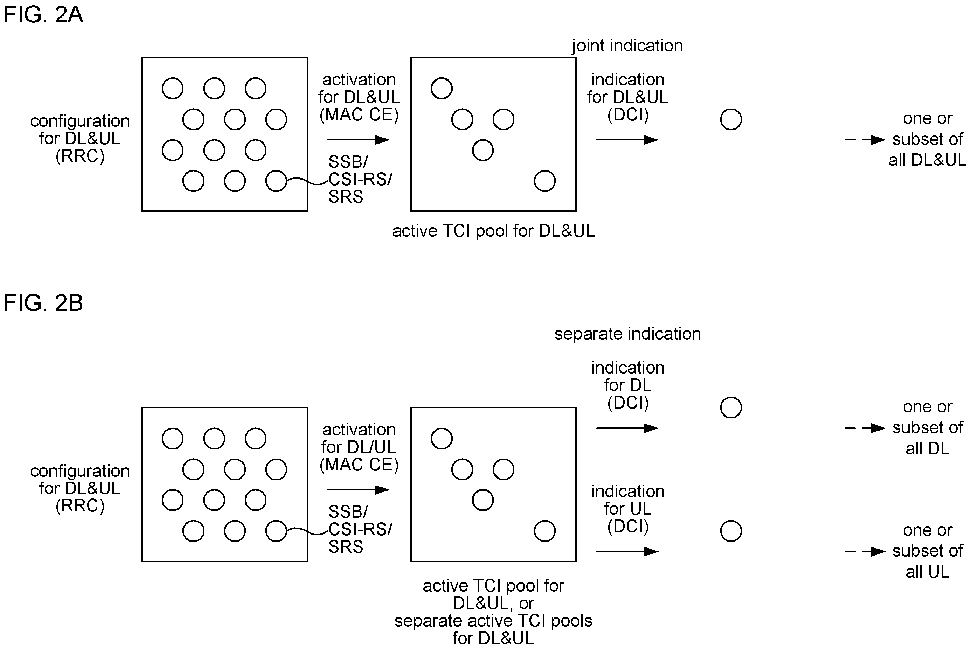

In the example in FIG. 2A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 2A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 2B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Existing DCI format 1_1/1_2 may be used for indication of a common TCI state.

A common TCI framework may include separate TCI states for DL and UL.

In the present disclosure, a TCI state pool, a TCI state list, a unified TCI state list, a joint TCI state pool, a separate TCI state pool, a separate DL/UL TCI state pool, a DL TCI state pool, a UL TCI state pool, a separate DL TCI state pool, and a separate UL TCI state pool may be interchangeably interpreted.

### (Unified TCI Framework in Carrier Aggregation (CA))

For NR in Rel. 17 (later versions), it is studied to introduce a unified TCI state framework in CA. A common TCI state indicated to the UE is expected to be common to CCs (cells) (at least QCL type D between CCs). This is due to that simultaneous reception of DL channels/RSs of different types of QCL type D and simultaneous transmission of UL channels/RSs of different spatial relations are not supported in existing specifications (Rel. 15/16) except for a case of transmission/reception using a plurality of TRPs and the like.

In addition, update/activation of a common TCI state ID is studied for provision of common QCL information / common UL transmission spatial filter over a set of a plurality of configured CCs in the unified TCI framework.

As a TCI state pool for CA, options 1 and 2 below are studied.

### {Option 1}

A single TCI state pool configured by RRC may be shared by (configured for) a set of a plurality of configured CCs (cells) / BWPs. For example, a cell group TCI state may be defined, or a TCI state pool for PDSCHs in a reference cell may be reused. With no CC (cell) ID for a QCL type A RS in a TCI state, a CC (cell) ID for a QCL type A RS may be determined according to a target CC (cell) in a TCI state.

In Option 1, a common TCI state pool is configured for every plurality of CCs/BWPs. Hence, when one common TCI state is indicated by a MAC CE / DCI, the indicated common TCI state may be applied to all the CCs/BWPs (all the CCs/BWPs included in a CC/BWP list configured in advance).

### [Option 2]

A TCI state pool may be configured by RRC for each individual CC.

In Option 2, as in Rel. 16, a CC/BWP application list for simultaneous beam update may be configured by RRC in advance, and when beam update is performed by a MAC CE / DCI in one of the CCs/BWPs included in the CC/BWP list, the update may be applied to all the CCs/BWPs.

In Option 1, a common TCI state pool is configured for (shared by) a plurality of CCs by RRC, a TCI state in the common TCI state pool is indicated by a common TCI state ID, and one RS determined based on the TCI state is used to indicate QCL type D over a set of a plurality of configured CCs/BWPs (Restriction 1).

In Option 2, a common TCI state pool is individually configured for each CC by RRC, a TCI state in the common TCI state pool is indicated by a common TCI state ID, and one RS determined based on the TCI state is used to indicate QCL type D over a set of a plurality of configured CCs/BWPs (Restriction 2).

### (Beam Application Time (BAT))

For DCI-based beam indication in Rel. 17, Study 1 and Study 2 below are under study with respect to application time to indicate a beam / unified TCI state.

### {Study 1}

It is studied that a first slot to which indicated TCI is applied is after at least Y symbols from a last symbol of an acknowledgement (ACK) for joint or separate DL/UL beam indication. It is studied that a first slot to which indicated TCI is applied is after at least Y symbols from a last symbol of an ACK / negative acknowledgement (NACK) for joint or separate DL/UL beam indication. The Y symbols may be configured by a base station, based on a UE capability reported by the UE. The UE capability may be reported in a symbol unit.

The ACK may be an ACK for a PDSCH scheduled by beam indication DCI. The PDSCH may not be scheduled by the beam indication DCI. The ACK in this case may be an ACK for the beam indication DCI.

For DCI-based beam indication in Rel. 17, it is studied that at least one Y symbol is configured for the UE for each BWP/CC.

When SCS varies between a plurality of CCs, a Y symbol value also varies, and thus there is a possibility that the application time varies between the plurality of CCs.

### {Study 2}

For a case of CA, application time for the beam indication may follow any one of Choice 1 to Choice 3 below.
{Choice 1} Both of the first slot and Y symbols are determined on a carrier with the lowest SCS, from among one or more carriers to which the beam indication is applied.
{Choice 2} Both of the first slot and Y symbols are determined on a carrier with the lowest SCS, from among one or more carriers to which the beam indication is applied and a UL carrier that delivers the ACK.
{Choice 3} Both of the first slot and Y symbols are determined on a UL carrier that delivers the ACK.

It is studied that as a CC simultaneous beam update function in Rel. 17, a beam is common to a plurality of CCs in the CA. According to Study 2, the application time is common to the plurality of CCs.

The application time (Y symbols) for the beam indication for the CA may be determined on a carrier with the lowest SCS, from among carriers to which the beam indication is applied. MAC CE-based beam indication in Rel. 17 (when only a single TCI codepoint is activated) may follow a Rel-16 application timeline for MAC CE activation.

Based on these studies, it is studied that the following operation is defined in a specification.

### {Operation}

When the UE transmits a last symbol of a PUCCH with HARQ-ACK information corresponding to DCI for communicating TCI state indication, application of an indicated TCI state with a Rel-17 TCI state may be started from a first slot after at least Y symbols from the last symbol of the PUCCH. Y may be a higher layer parameter (for example, BeamAppTime_r17 [symbol]). Both of the first slot and Y symbols may be determined on a carrier with the lowest SCS, from among carriers to which the beam indication is applied. At a certain timing, the UE may assume one indicated TCI state with a Rel-17 TCI state for DL and UL, or may assume one indicated TCI state with a Rel-17 TCI state for UL (separately from DL) .

In place of Y [symbol], X [ms] may be used.

For the application time, it is studied that the UE reports at least one of UE capabilities 1 and 2 below.

### {UE Capability 1}

Minimum application time for each SCS (minimum value of Y symbols between a last symbol of a PUCCH that delivers an ACK and a first slot to which a beam is applied).

### {UE Capability 2}

A minimum time gap between a last symbol of a beam indication PDCCH (DCI) and a first slot to which a beam is applied. A gap between the last symbol of the beam indication PDCCH (DCI) and the first slot to which the beam is applied may satisfy the UE capability (minimum time gap).

UE capability 2 may be an existing UE capability (for example, timeDurationForQCL).

A relationship between indication of a beam and a channel/RS to which the beam is applied may satisfy at least one of UE capabilities 1 and 2.

### (Analysis)

For Rel. 17 (or later versions), it is studied that UE capability information for reporting a maximum number of configured TCI states is introduced to a case where configuration/indication of a TCI state over a plurality of BWPs/CCs in a certain band is supported. A maximum number of TCI state pools / lists over the plurality of BWPs/CCs may be 1 or greater for each band.

For CA in a unified TCI framework of Rel. 17, it is studied that a CC-specific TCI state pool / configuration (Case 1) and a CC-common TCI state pool / configuration (Case 2) are supported.

### {Case 1}

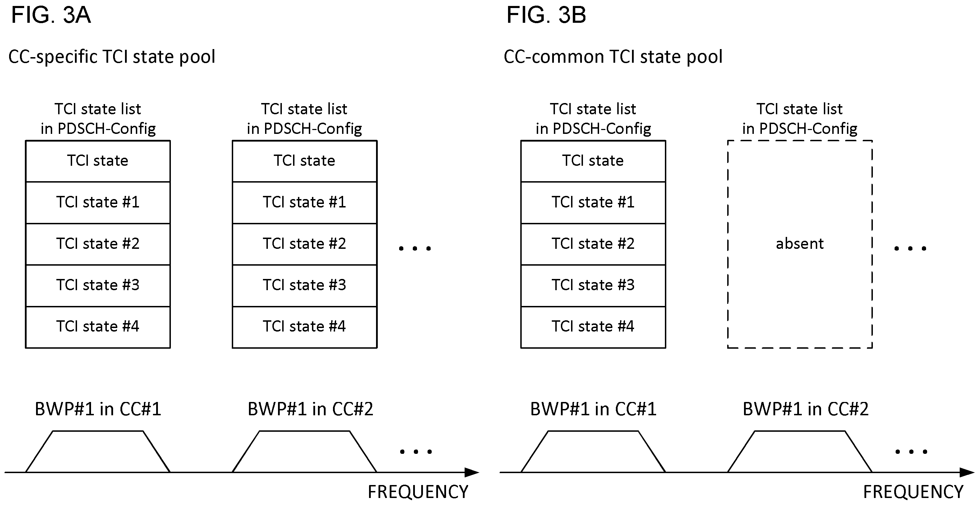

FIG. 3A shows an example of the CC-specific TCI state pool. In this example, a TCI state list in a PDSCH configuration is configured for BWP 1 in CC 1, and a TCI state list in the PDSCH configuration is configured for BWP 1 in CC 2.

### {Case 2}

FIG. 3B shows an example of the CC-common TCI state pool. In this example, a TCI state list in the PDSCH configuration is configured for BWP 1 in CC 1, and a TCI state list in the PDSCH configuration is not configured (absent) for BWP 1 in CC 2.

For Rel. 17 (or later versions), it is studied that an RRC parameter for at least one of a unified TCI state and a unified TCI state list is introduced.

Case 1 / Case 2 above may be configured as two modes based on higher layer signaling (RRC signaling/parameter).

For example, in Case 1 above, the number of TCI states similar to that of an existing specification (for example, Rel. 15/16) may be configurable. The number of TCI states may be, for example, a number represented by maximum number of CCs (for example, 32) × maximum number of BWPs (for example, 4) × specific number (for example, 128), in a certain band.

For example, in Case 2 above, the number of configurable TCI states can be reduced more than that of Case 1 above, and RRC signaling overhead can be reduced. The number of TCI states may be a specific number (for example, 128). For example, Case 2 above can reduce memory consumption by the UE, as compared with Case 1 above.

For Rel. 17 (or later versions), it is studied that in at least one of Case 1 and Case 2 above, one MAC CE / DCI indicates a TCI state (ID).

This operation may be similar to simultaneous update of beams in a plurality of CCs defined in Rel. 16. One or a plurality of TCI states indicated by using the MAC CE / DCI may be applied to a plurality of (for example, all the) CCs/BWPs included in a CC/BWP list configured by using RRC.

For Rel. 17 (or later versions), it is studied that BAT is indicated by a specific number of symbols (for example, Y symbols). A symbol/slot that serves as a reference of a start of the BAT (which may be referred to as a first symbol/slot) may be a last symbol of a PUCCH for communicating a HARQ-ACK associated with beam indication DCI.

It is studied that BAT defined in Rel. 17 (or later versions) (for example, BeamAppTime_r17) is configured (collectively) over a plurality of CCs/BWPs. It is studied that the BAT is configured for each SCS configuration.

For Rel. 17 (or later versions), Choice A to Choice C below are under study with respect to a method for beam indication by DCI in a case of CA.

{Choice A} The first symbol/slot and Y symbols are determined based on a carrier with configuration of the lowest SCS, from among carriers to which the beam indication is applied.

{Choice B} The first symbol/slot and Y symbols are determined based on a carrier with configuration of the lowest SCS, from among carriers to which the beam indication is applied and UL carriers that communicate HARQ-ACKs.

{Choice C} The first symbol/slot and Y symbols are determined based on a carrier with configuration of the lowest SCS, from among UL carriers that communicate HARQ-ACKs.

Based on Choice A above, for example, a value of the Y symbols varies when SCS configuration varies for each CC, and thus it is conceivable that the BAT varies for each CC.

Based on Choice B above, the BAT can be a common value for each CC (for example, a highest value from among values for all the CCs).

However, in such TCI state configuration/indication over a plurality of CCs/BWPs, a method for applying / referring to a TCI state and a method for determining BAT are indefinite. Unless such methods are definite, throughput reduction / degradation in communication quality may occur.

Thus, the inventors of the present invention came up with the idea of a method for applying/determining a TCI state for one or more TCI state pools and a plurality of cells.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a common beam, a common TCI, a common TCI state, a unified TCI, a unified TCI state, a TCI state applicable to DL and UL, a TCI state applied to a plurality of (plurality of types of) channels/RSs, a TCI state applicable to a plurality of types of channels/RSs, and a PL-RS may be interchangeably interpreted.

In the present disclosure, a plurality of TCI states configured by RRC, a plurality of TCI states activated by a MAC CE, a pool (which may be referred to as a list), a TCI state pool, an active TCI state pool, a common TCI state pool, a joint TCI state pool, a separate TCI state pool, a common TCI state pool for UL, a common TCI state pool for DL, a common TCI state pool configured/activated by RRC / MAC CE, and TCI state information may be interchangeably interpreted.

In the present disclosure, DL TCI, DL only TCI, separate DL only TCI, DL common TCI, DL unified TCI, common TCI, and unified TCI may be interchangeably interpreted. In the present disclosure, UL TCI, UL only TCI, separate UL only TCI, UL common TCI, UL unified TCI, common TCI, and unified TCI may be interchangeably interpreted.

In the present disclosure, a separate TCI state being configured/indicated/updated, a DL only TCI state being configured/indicated, a UL only TCI state being configured/indicated/updated, and DL and UL TCI states being configured/indicated/updated may be interchangeably interpreted.

In the present disclosure, a case of a joint TCI pool and a case where a joint TCI pool is configured may be interchangeably interpreted. In the present disclosure, a case of a separate TCI pool and a case where a separate TCI pool is configured may be interchangeably interpreted.

In the present disclosure, a case where a joint TCI pool is configured, a case where a TCI pool configured for DL and a TCI pool configured for UL are in common, a case where a TCI pool for both DL and UL is configured, and a case where one TCI pool (one set of TCIs) is configured may be interchangeably interpreted.

In the present disclosure, a case where separate TCI pools are configured, a case where a TCI pool configured for DL and a TCI pool configured for UL are different from each other, a case where a TCI pool for DL (first TCI pool, first TCI set) and a TCI pool for UL (second TCI pool, second TCI set) are configured, a case where a plurality of TCI pools (plurality of sets of TCIs) are configured, and a case where a TCI pool for DL is configured may be interchangeably interpreted. When a TCI pool for DL is configured, a TCI pool for UL may be equal to the configured TCI pool.

In the present disclosure, a channel/RS to which a common TCI is applied may be a PDSCH / HARQ-ACK information / PUCCH / PUSCH / CSI-RS / SRS.

In the present disclosure, an indicated CC (cell), an indicated CC (cell) / BWP, and an indicated CC (cell) / BWP indicated by a MAC CE may be interchangeably interpreted. In the present disclosure, a CC (cell) and a CC (cell) / BWP may be interchangeably interpreted.

In the present disclosure, a CC list, a BWP list, a set of configured CCs, and a set of configured BWPs may be interchangeably interpreted.

### (Radio Communication Method)

In the present disclosure, a TCI state, a unified TCI state, a UL and DL TCI state for joint TCI indication, a UL only TCI state for separate TCI indication, and a DL only TCI state for separate TCI indication may be interchangeably interpreted.

In respective diagrams of the present disclosure, a unified TCI state is sometimes simply represented as a TCI state.

As a new RRC parameter, a unified TCI state / unified TCI state list / unified TCI state pool may be introduced. As the new RRC parameter, a new BWP / CC list indicating a set of BWPs/CCs may be introduced.

### <First Embodiment>

This embodiment relates to a CC list for at least one of TCI state pool configuration and TCI state indication by a MAC CE / DCI.

For determination of a TCI state for a BWP/CC without a configured TCI state pool, a UE may refer to a TCI state pool configured for another specific BWP/CC (reference BWP/CC).

The UE may refer to the TCI state pool in accordance with at least one of Aspect 1-A to Aspect 1-C described below.

In aspects described below, a "CC" will be primarily described, but the "CC" may be appropriately interpreted as a "BWP."

### <<Aspect 1-A>>

The UE may be configured with a CC list including a plurality of CCs by using higher layer signaling (RRC signaling).

For determination of a TCI state for a CC without a configured TCI state pool, the UE may determine a CC (reference BWP/CC) with a configured TCI state pool, from among the plurality of CCs. The UE may refer to the TCI state pool configured for the determined CC to perform determination/update/application of the TCI state for the CC without a configured TCI state pool.

The CC list may be used for configuration of the TCI state pool in Case 2 above. The CC list may be used for (unified) TCI state (ID) update/indication using a MAC CE / DCI.

### <<Aspect 1-B>>

The UE may be configured with a CC list including a plurality of CCs by using higher layer signaling (RRC signaling).

The UE may be configured with a first CC list used for (unified) TCI state (ID) update/indication using a MAC CE / DCI.

The UE may be configured with a second CC list used for configuration of the TCI state pool in Case 2 above.

For determination of a TCI state for a CC without a configured TCI state pool, the UE may determine a CC (reference BWP/CC) with a configured TCI state pool, from among a plurality of CCs included in the second CC list. The UE may refer to the TCI state pool configured for the determined CC to perform determination/update/application of the TCI state for the CC without a configured TCI state pool.

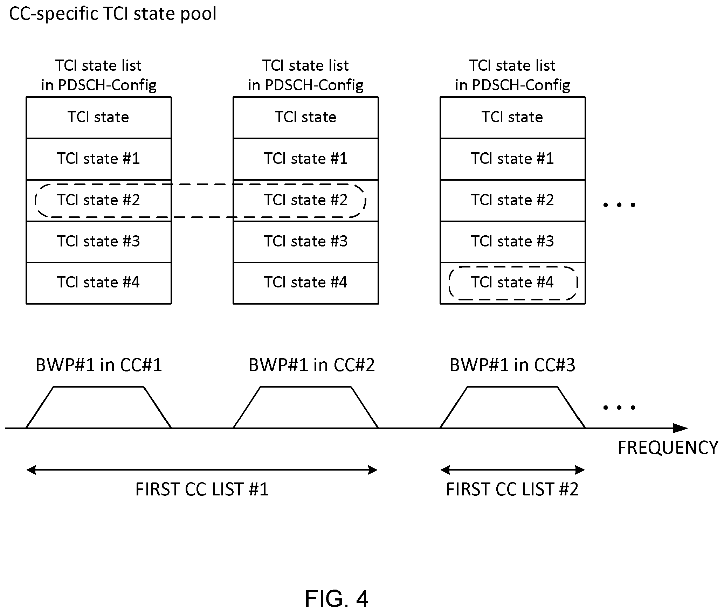

FIG. 4 is a diagram to show an example of the CC list configuration according to Aspect 1-B. FIG. 4 shows Case 1 above. In the example shown in FIG. 4, TCI state pools (lists) are configured for respective ones of (BWP #1 in) CC #1, (BWP #1 in) CC #2, and (BWP #1 in) CC #3. The TCI state lists are configured in a PDSCH configuration.

In the example shown in FIG. 4, a first CC list is configured for the UE, the first CC list being used for (unified) TCI state (ID) update/indication using a MAC CE / DCI. The first CC list includes a list (first CC list #1) including (BWP #1 in) CC #1 and (BWP #1 in) CC #2, and a list (first CC list #2) including (BWP #1 in) CC #3.

In the example shown in FIG. 4, the MAC CE / DCI indicates a TCI state ID (here, TCI state #2) in (BWP #1 in) CC #1 and (BWP #1 in) CC #2, for the UE, based on the first CC list. The MAC CE / DCI indicates, for the UE, a TCI state ID (here, TCI state #4) in (BWP #1 in) CC #3.

Note that a plurality of the first CC lists may be configured. The example shown in FIG. 4 shows an example in which a plurality of the first CC lists are configured.

Indication of TCI state IDs in (BWP #1 in) CC #1 and (BWP #1 in) CC #2 and indication of a TCI state ID in (BWP #1 in) CC #3 may be performed by respective different MAC CEs / pieces of DCI, or may be performed by a common MAC CE / DCI.

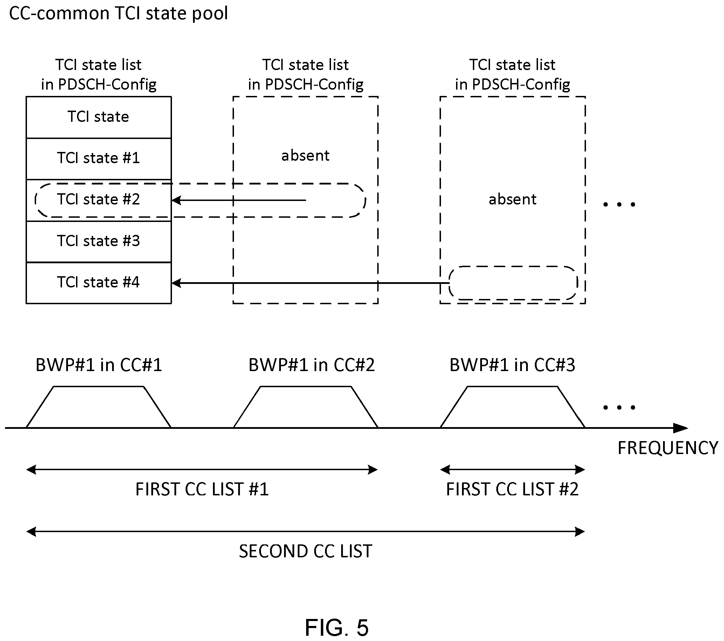

FIG. 5 is a diagram to show another example of the CC list configuration according to Aspect 1-B. FIG. 5 shows Case 2 above. In the example shown in FIG. 5, a TCI state pool (list) is configured for (BWP #1 in) CC #1, and TCI state pools (lists) are not configured for (BWP #1 in) CC #2 and (BWP #1 in) CC #3. The TCI state list is configured in a PDSCH configuration.

In the example shown in FIG. 5, a first CC list is configured for the UE, the first CC list being used for (unified) TCI state (ID) update/indication using a MAC CE / DCI (indicating a plurality of CCs/BWPs using a common MAC CE / DCI). The first CC list includes a list (first CC list #1) including (BWP #1 in) CC #1 and (BWP #1 in) CC #2, and a list (first CC list #2) including (BWP #1 in) CC #3.

In the example shown in FIG. 5, a second CC list is configured for the UE, the second CC list being used for configuration of the TCI state pool in Case 2 above (indicating a plurality of CCs/BWPs using a common TCI state pool). The UE refers to a TCI state list configured for a specific CC from among a plurality of CCs included in the second CC list. In the example shown in FIG. 5, the second CC list includes (BWP #1 in) CC #1, (BWP #1 in) CC #2, and (BWP #1 in) CC #3.

In the example shown in FIG. 5, the UE refers to a TCI state list in (BWP #1 in) CC #1, for a CC/BWP without a configured TCI state list ((BWP #1 in) CC #2 and (BWP #1 in) CC #3), based on the second CC list. In other words, the UE determines a TCI state for the CC/BWP without a configured TCI state list, based on a TCI state list for a CC/BWP with a configured TCI state list.

In the example shown in FIG. 5, the MAC CE / DCI indicates a TCI state ID in (BWP #1 in) CC #1 and (BWP #1 in) CC #2 (here, TCI state #2 of the TCI state list in CC #1), for the UE, based on the first CC list. For example, when receiving a MAC CE / DCI that indicates a TCI state for one CC in the first CC list, the UE may apply, to another CC in the first CC list, a TCI state indicated by the MAC CE / DCI. The MAC CE / DCI indicates, for the UE, a TCI state ID (here, TCI state #4 of the TCI state list in CC #1) in (BWP #1 in) CC #3.

Note that the example shown in FIG. 5 shows an example in which the first CC list and the second CC list indicate respective different CCs (in other words, these lists include respective different combinations of CCs), but is not restrictive. The first CC list and the second CC list may be lists indicating the same CC.

A plurality of at least one of the first CC lists and the second CC lists may be configured. The example shown in FIG. 5 shows an example in which a plurality of the first CC lists are configured and one of the second CC lists is configured.

Indication of TCI state IDs in (BWP #1 in) CC #1 and (BWP #1 in) CC #2 and indication of a TCI state ID in (BWP #1 in) CC #3 may be performed by respective different MAC CEs / pieces of DCI, or may be performed by a common MAC CE / DCI.

Note that, in a case where a plurality of the first CC lists are configured and where a TCI state (ID) is indicated by using a MAC CE / DCI in at least one CC/BWP included in a certain list of the plurality of lists, the UE may apply the indicated TCI state (ID) to a plurality of (for example, all the) CCs/BWPs included in the certain list. The UE may perform application of TCI states separately for each of the plurality of lists.

When the first CC list for all the CCs/BWPs is configured, the UE may determine/assume/expect that a TCI state (ID) is indicated by using a MAC CE / DCI for each CC/BWP.

### <<Aspect 1-C>>

The UE may not be configured with a CC list (first/second CC list) including a plurality of CCs by using higher layer signaling (RRC signaling).

The plurality of CCs (first/second CC list) may be a plurality of (for example, all the) CCs in an identical band (which may be a frequency range). The UE may determine that the plurality of CCs (CC list) are a plurality of (for example, all the) CCs in an identical band (frequency range).

The CC list for configuration of the TCI state pool in Case 2 above may not be configured for the UE by using RRC.

Note that, in Case 2 above (in at least one of Aspect 1-A to Aspect 1-C), a maximum number of CCs for which a TCI state pool is configured in a plurality of (for example, all the) CCs included in the CC list may be a specific number (for example, one).

### <<Variations of First Embodiment>>

The UE may not be configured with at least one of the first CC list and the second CC list for at least one CC/BWP.

When the first CC list is not configured for a certain CC/BWP (in other words, when the configured first CC list does not include the certain CC/BWP), the UE may determine, for the certain CC/BWP, that update of a TCI state ID of a common TCI state is not performed. In this case, the UE may determine/assume/expect, for the certain CC/BWP, that a TCI state (ID) is indicated by using the MAC CE / DCI for each CC/BWP.

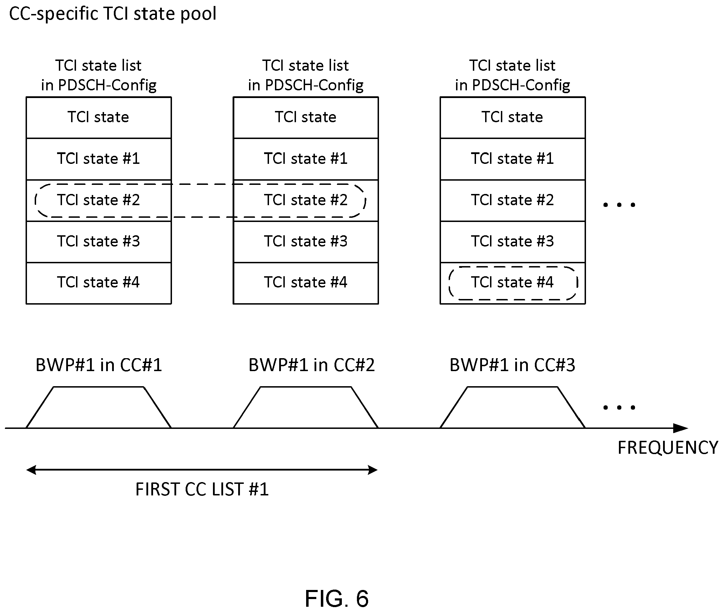

FIG. 6 is a diagram to show an example of the CC list configuration in Case 1 according to variations of the first embodiment. FIG. 6 shows Case 1 above. In the example shown in FIG. 6, TCI state pools (lists) are configured for respective ones of (BWP #1 in) CC #1, (BWP #1 in) CC #2, and (BWP #1 in) CC #3. The TCI state lists are configured in a PDSCH configuration.

In the example shown in FIG. 6, a first CC list is configured for the UE, the first CC list being used for (unified) TCI state (ID) update/indication using a MAC CE / DCI. The first CC list includes a list (first CC list #1) including (BWP #1 in) CC #1 and (BWP #1 in) CC #2. The first CC list related to (BWP #1 in) CC #3 is not configured for the UE.

In the example shown in FIG. 6, the UE may determine/assume/expect, for (BWP #1 in) CC #3, that a TCI state (ID) is indicated by using the MAC CE / DCI for each CC/BWP. In the example shown in FIG. 6, TCI state #2 is indicated by using one MAC CE / DCI, in BWP #1 in CC #1 and BWP #1 in CC #2, and TCI state #4 is indicated by using one MAC CE / DCI, in BWP #1 in CC #3.

When the second CC list is not configured for a certain CC/BWP (in other words, when the configured second CC list does not include the certain CC/BWP), the UE may determine that a plurality of (for example, all the) CCs/BWPs in an identical band (or frequency range) are configured as the second CC list.

When the first CC list is not configured for a certain CC/BWP (in other words, when the configured first CC list does not include the certain CC/BWP), the UE may determine that a plurality of (for example, all the) CCs/BWPs in an identical band (or frequency range) are configured as the first CC list.

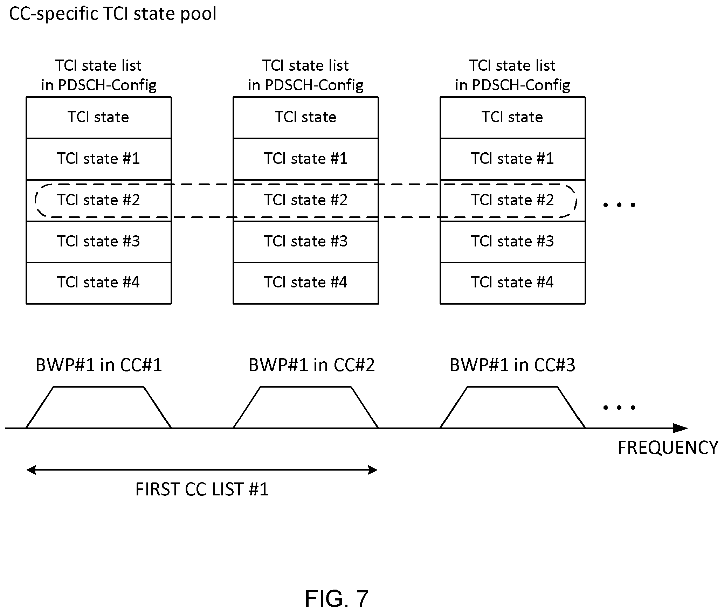

FIG. 7 is a diagram to show another example of the CC list configuration in Case 1 according to the variations of the first embodiment. In FIG. 7, configuration of the TCI state lists and configuration of the first CC list are similar to those of FIG. 6.

In FIG. 7, the UE may determine that the configured first CC list (including CC #1 and CC #2) includes (BWP #1 in) CC #3. The UE may also apply, to CC #3, indication of a TCI state (ID) indicated for CC #1 and CC #2.

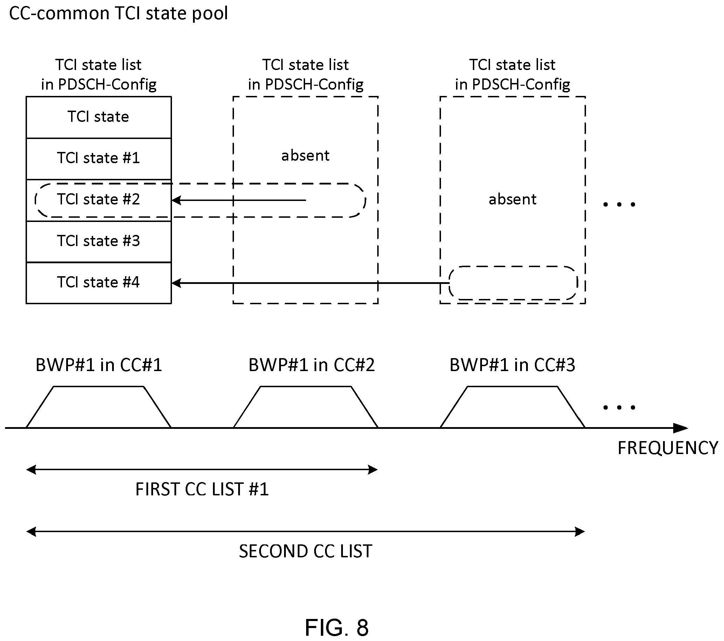

FIG. 8 is a diagram to show an example of the CC list configuration in Case 2 according to the variations of the first embodiment. FIG. 8 shows Case 2 above. In the example shown in FIG. 8, a TCI state pool (list) is configured for (BWP #1 in) CC #1, and TCI state pools (lists) are not configured for (BWP #1 in) CC #2 and (BWP #1 in) CC #3. The TCI state list is configured in a PDSCH configuration.

In the example shown in FIG. 8, a first CC list is configured for the UE, the first CC list being used for (unified) TCI state (ID) update/indication using a MAC CE / DCI. The first CC list includes a list (first CC list #1) including (BWP #1 in) CC #1 and (BWP #1 in) CC #2. The first CC list related to (BWP #1 in) CC #3 is not configured for the UE.

In the example shown in FIG. 8, a second CC list is configured for the UE, the second CC list being used for configuration of the TCI state pool in Case 2 above. The UE refers to a TCI state list configured for a specific CC from among a plurality of CCs included in the second CC list. In the example shown in FIG. 8, the second CC list includes (BWP #1 in) CC #1, (BWP #1 in) CC #2, and (BWP #1 in) CC #3.

In the example shown in FIG. 8, the UE may determine/assume/expect, for (BWP #1 in) CC #3, that a TCI state (ID) is indicated by using the MAC CE / DCI for each CC/BWP. In the example shown in FIG. 8, TCI state #2 is indicated by using one MAC CE / DCI, in BWP #1 in CC #1 and BWP #1 in CC #2, and TCI state #4 is indicated by using one MAC CE / DCI, in BWP #1 in CC #3.

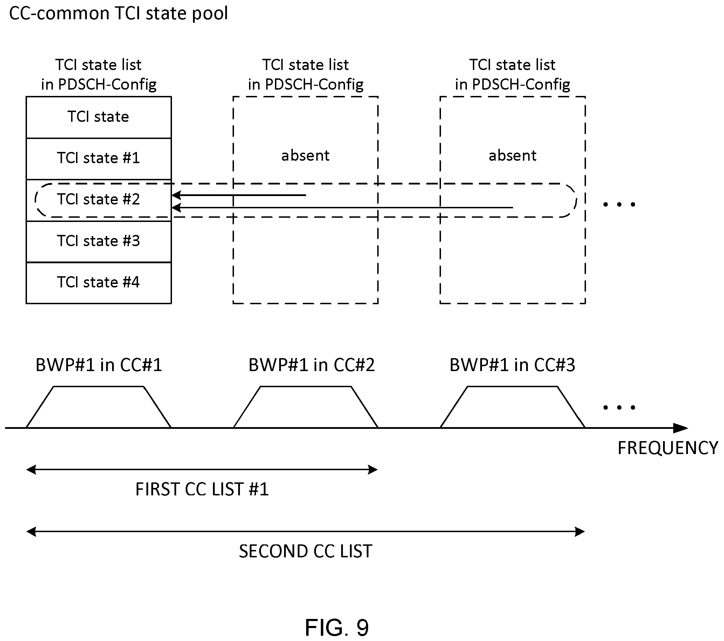

FIG. 9 is a diagram to show another example of the CC list configuration in Case 2 according to the variations of the first embodiment. In FIG. 9, configuration of the TCI state list and configuration of the first CC list are similar to those of FIG. 8.

In FIG. 9, the UE may determine that the configured first CC list (including CC #1 and CC #2) includes (BWP #1 in) CC #3. The UE may also apply, to CC #3, indication of a TCI state (ID) indicated for CC #1 and CC #2.

Note that, in the present disclosure, when the first CC list / second CC list is configured for the UE, the UE may determine that a function for updating a common TCI state ID is configured and operate.

According to the first embodiment above, a list for configuring/indicating a CC/BWP is defined, thereby allowing TCI state indication over a plurality of CCs/BWPs to be appropriately performed.

### <Second Embodiment>

This embodiment relates to a UE capability.

### <<Aspect 2-1>>

A UE may report, to a base station / network, UE capability information (first UE capability information) related to whether the UE supports at least one of Case 1 and Case 2 above (TCI state pool configuration mode).

The first UE capability information may be defined as whether the UE supports any one of Case 1 above, Case 2 above, and both of Cases 1 and 2 above.

Whether the UE supports Case 1 above may be indicated as whether the UE supports TCI pool sharing.

The UE may report the number of supported TCI states, based on which of Case 1, Case 2, or both of Cases 1 and 2 a supported mode corresponds to. The UE may report different numbers of supported TCI states, based on which of Case 1, Case 2, or both of Cases 1 and 2 a supported mode corresponds to.

For example, the UE may report the number of supportable TCI states in Case 1. The UE may report the number of supportable TCI states in Case 2. The number of supportable TCI states in Case 1 and the number of supportable TCI states in Case 2 may be separately reported by the UE.

The number of supportable TCI states above may be the number of TCI states configurable for the UE.

A reported value (number of TCI states) may be defined for each BWP / each CC / each band / each UE.

Which each unit the reported value is reported for may be determined for each BWP / each CC / each band / each band combination / each band in a band combination / each CC in a band in a band combination.

According to Aspect 2-1, for example, memory consumption by the UE can be reduced in Case 2, and thus it is possible to report a greater number of TCI states for each case.

### <<Aspect 2-2>>

The UE may report UE capability information (second UE capability information) indicating a maximum number of TCI state pools configured over a plurality of (for example, all the) BWPs/CCs in one band.

The maximum number may be, for example, an integer between 1 and 128 (or greater than 128).

The UE may report the second UE capability information only when supporting Case 2 above (Aspect 2-2-1). In this case, the number reported by the second UE capability information may mean the number of TCI state pools in Case 2. In other words, the number reported by the second UE capability information may not mean the number of TCI state pools in Case 1.

In this case, the number reported by the second UE capability information may mean the number of TCI state pools in Case 1 and Case 2 (Aspect 2-2-2).

For example, in Aspect 2-2-2, when the UE reports, as the second UE capability information, that a maximum number of TCI state pools configured over all the BWPs/CCs in one band is 1, the UE can perform operation related to at least Case 2. In this case, if up to one BWP/CC is configured for the UE for each band, the UE can perform operation related to Case 1.

For example, in Aspect 2-2-2, when the UE reports, as the second UE capability information, that a maximum number of TCI state pools configured over all the BWPs/CCs in one band is more than one (for example, 10), the UE can perform operation related to at least Case 2. In this case, if up to ten BWPs/CCs are configured for the UE for each band, the UE can perform operation related to Case 1.

Note that, in at least one of Aspect 2-1 and Aspect 2-2 above, the number of TCI states may be interpreted as the number of active TCI states, and vice versa.

According to the second embodiment above, it is possible to operate while reducing memory consumption by the UE and maintaining compatibility with an existing specification.

### <Third Embodiment>

A third embodiment relates to BAT.

The BAT (for example, an RRC parameter "BeamAppTime_r17") may be configured in a plurality of CCs/BWPs for each subcarrier spacing (SCS) configuration.

The BAT (BeamAppTime_r17) may be configured in a higher layer parameter for each CC / serving cell.

For example, a base station may configure the BAT (BeamAppTime_r17) for each CC/BWP such that BAT corresponding to certain SCS is common in an identical band.

For example, the UE may assume/expect that the BAT (BeamAppTime_r17) for each CC/BWP is configured such that BAT corresponding to certain SCS is common in an identical band.

A case of beam indication over carriers/CCs (for example, cross-carrier beam indication) will be described below.

When SCS for DCI for the beam indication is different from SCS of a CC to which the beam indication is applied, the UE may determine that BAT (BeamAppTime_r17) with the SCS for the DCI is applied.

When SCS for DCI for the beam indication is different from SCS of a CC to which the beam indication is applied, the UE may determine that BAT (BeamAppTime_r17) with the SCS of the applied CC is applied.

BAT for beam indication over carriers/CCs (for example, cross-carrier beam indication) (which may be referred to as additional BAT) may be defined/configured.

The additional BAT may be defined/configured in addition to BAT (for example, BeamAppTime_r17) configured by higher layer signaling.

The additional BAT may be predefined by a specification, may be configured for the UE by higher layer signaling (RRC / MAC CE), or may be determined based on UE capability information to be reported.

The UE may determine application of the additional BAT, based on a specific condition.

For example, the specific condition may be a case where a CC indicated by beam indication DCI is different from a CC with the beam indication DCI. For example, the specific condition may be a case where a beam (TCI state) is indicated by cross-carrier scheduling DCI.

For example, the specific condition may be a case where a CC indicated by beam indication DCI (scheduled CC) is different from a CC with the beam indication DCI (scheduling CC) and where SCS of the scheduled CC is different from SCS of the scheduling CC.

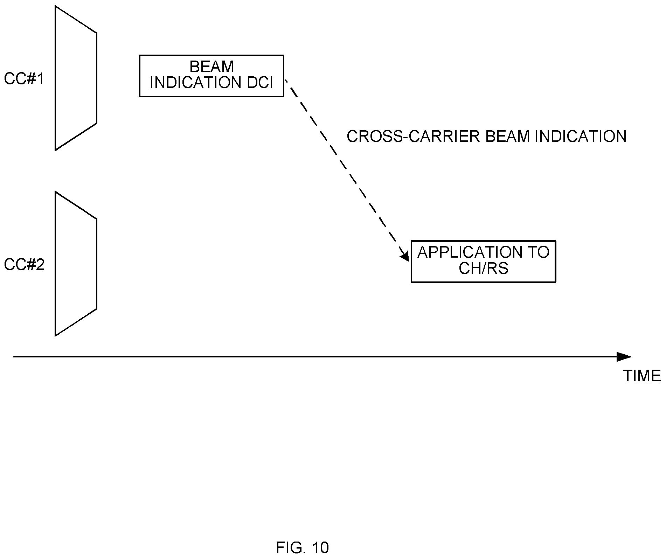

FIG. 10 is a diagram to show an example of the beam indication according to the third embodiment. In the example shown in FIG. 10, the beam indication DCI is transmitted in CC #1. The beam indication DCI indicates that a TCI state in CC #2 is applied to a channel (CH) / signal (RS).

In the example shown in FIG. 10, based on a case where a CC indicated by the beam indication DCI is different from a CC with the beam indication DCI, the UE determines that the beam indication is cross-carrier beam indication and determines BAT related to TCI state application by the beam indication.

Note that, in the example shown in FIG. 10, when the function related to update of a common TCI state ID described in the first embodiment above is configured, the UE may apply TCI state (ID) indication by the beam indication DCI to a plurality of CCs/BWPs included in a CC list including CC #2.

According to the third embodiment above, it is possible to appropriately determine BAT even when receiving beam indication over carriers/CCs.

### <Other Embodiments>

### <<UE Capability Information / Higher Layer Parameter>>

A higher layer parameter (RRC IE) / UE capability corresponding to a function (characteristics, feature) in each embodiment above may be defined. The higher layer parameter may indicate whether the function is enabled. The UE capability may indicate whether the UE supports the function.

The UE configured with the higher layer parameter corresponding to the function may perform the function. "The UE not configured with the higher layer parameter corresponding to the function does not perform the function (for example, follows Rel. 15/16)" may be defined.

The UE that has reported/transmitted the UE capability indicating support of the function may perform the function. "The UE that has not reported the UE capability indicating support of the function does not perform the function (for example, follows Rel. 15/16)" may be defined.

When the UE reports/transmits the UE capability indicating support of the function and is configured with the higher layer parameter corresponding to the function, the UE may perform the function. "When the UE does not report/transmit the UE capability indicating support of the function or when the UE is not configured with the higher layer parameter corresponding to the function, the UE does not perform the function (for example, follows Rel. 15/16)" may be defined.

Which embodiment/option/choice/function in the plurality of embodiments above is used may be configured by a higher layer parameter, may be reported by a UE as a UE capability, may be defined in a specification, or may be determined by a reported UE capability and higher layer parameter configuration.

The UE capability may indicate whether the UE supports at least one function of the following.
- Unified TCI framework
- One or both of joint TCI and separate TCI
- One or both of CC-common TCI state pool and CC-specific TCI state pool

The UE capability may indicate at least one value of the following.
- Number (maximum number) of TCI states configured for each BWP / each CC / each band / each UE
- Number (maximum number) of active TCI states for each BWP / each CC / each band / each UE
- Number (maximum number) of TCI state pools (TCI state lists) over set of BWPs/CCs

According to the UE capability / higher layer parameter above, the UE can implement the above functions while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

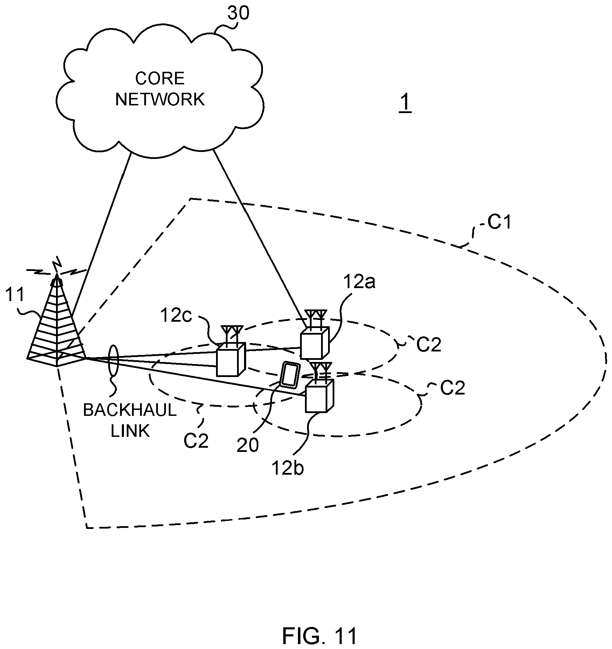

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

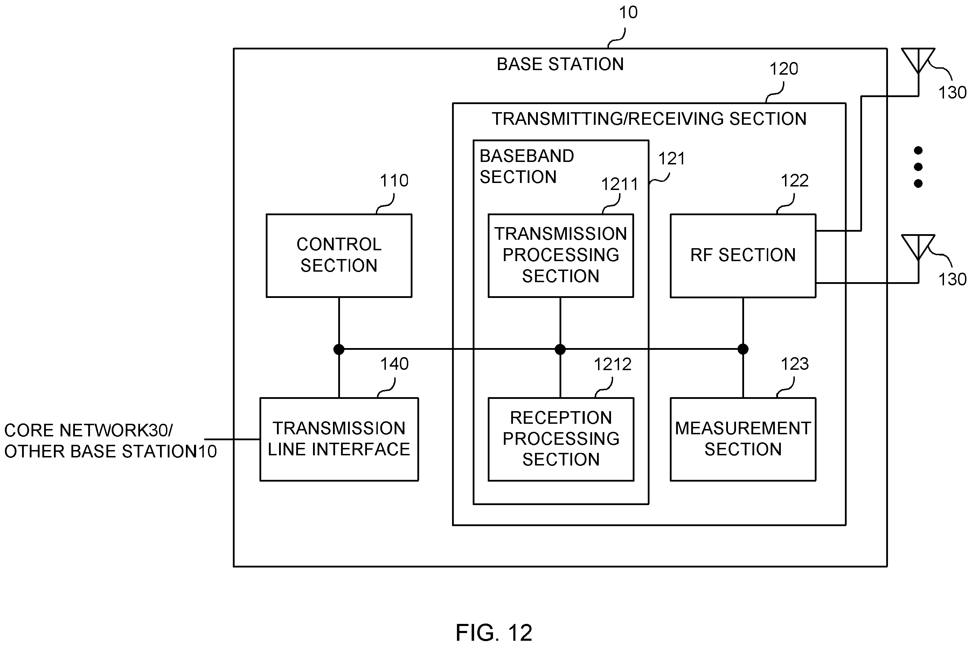

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit one or more transmission configuration indication (TCI) state lists for at least one of downlink and uplink in one or more cells of a plurality of cells (CCs/BWPs), may transmit at least one of a list of first cells (CCs) for indication of one or more TCI states in the one or more TCI state lists and a list of second cells (CCs) for reference to one of the one or more TCI state lists, and may transmit the indication (beam indication MAC CE / DCI). The control section 110 may indicate, by using at least one of the list of first cells and the list of second cells, application of the one or more TCI states to a part or all of the plurality of cells (first embodiment).

### (User Terminal)

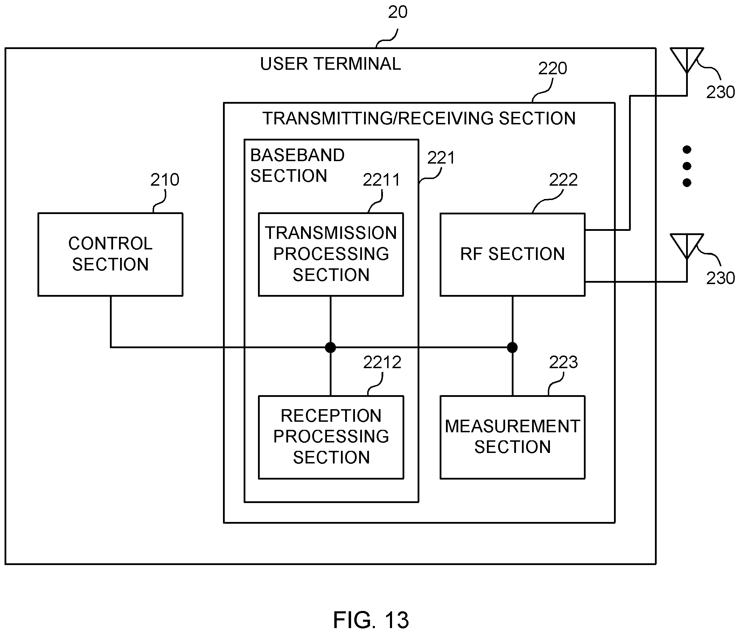

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one or more transmission configuration indication (TCI) state lists for at least one of downlink and uplink in one or more cells of a plurality of cells (CCs/BWPs), may receive at least one of a list of first cells (CCs) for indication of one or more TCI states in the one or more TCI state lists and a list of second cells (CCs) for reference to one of the one or more TCI state lists, and may receive the indication (beam indication MAC CE / DCI). The control section 210 may apply the one or more TCI states to a part or all of the plurality of cells, based on at least one of the list of first cells and the list of second cells (first embodiment).

The control section 210 may determine, based on the list of first cells (CCs), a cell to which a TCI state ID indicated by using the indication is applied, and may determine, based on the list of second cells (CCs), a cell for referring to one of the one or more TCI state lists (first embodiment).

The one or more TCI state lists may be either TCI state lists for each of the plurality of cells or a TCI state list common to the plurality of cells (first embodiment).

The control section 210 may determine, based on a cell in which the indication is received, and a cell with a channel to which a TCI state is applied by using the indication, a timing of the application of the TCI state (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

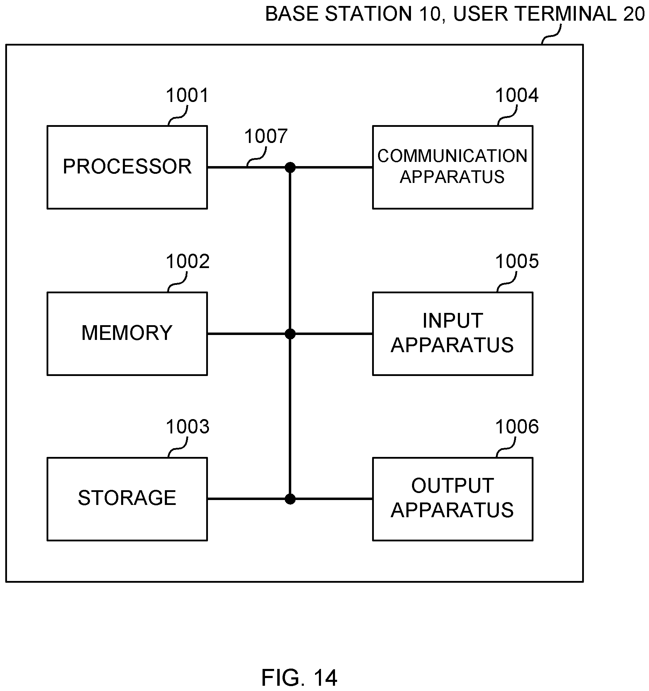

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

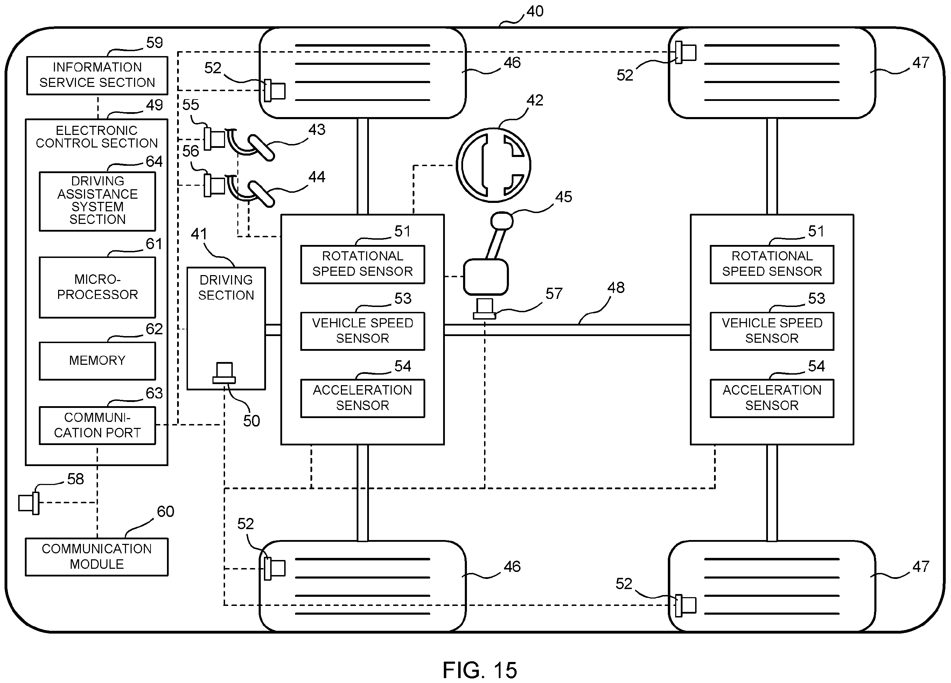

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2022-027218 filed on Feb. 24, 2022, the entire contents of which are incorporated herein by reference.

## Claims

1. A terminal comprising:
a receiving section that receives one or more transmission configuration indication (TCI) state lists for at least one of downlink and uplink in one or more cells of a plurality of cells, receives at least one of a list of first cells for indication of one or more TCI states in the one or more TCI state lists and a list of second cells for reference to one of the one or more TCI state lists, and receives the indication; and
a control section that applies the one or more TCI states to a part or all of the plurality of cells, based on at least one of the list of first cells and the list of second cells.

2. The terminal according to claim 1, wherein
the control section determines, based on the list of first cells, a cell to which a TCI state ID indicated by using the indication is applied, and determines, based on the list of second cells, a cell for referring to one of the one or more TCI state lists.

3. The terminal according to claim 1 or 2, wherein
the one or more TCI state lists are either TCI state lists for each of the plurality of cells or a TCI state list common to the plurality of cells.

4. The terminal according to any one of claims 1 to 3, wherein
the control section determines, based on a cell in which the indication is received, and a cell with a channel to which a TCI state is applied by using the indication, a timing of the application of the TCI state.

5. A radio communication method for a terminal, the radio communication method comprising:
receiving one or more transmission configuration indication (TCI) state lists for at least one of downlink and uplink in one or more cells of a plurality of cells, receiving at least one of a list of first cells for indication of one or more TCI states in the one or more TCI state lists and a list of second cells for reference to one of the one or more TCI state lists, and receiving the indication; and
applying the one or more TCI states to a part or all of the plurality of cells, based on at least one of the list of first cells and the list of second cells.

6. A base station comprising:
a transmitting section that transmits one or more transmission configuration indication (TCI) state lists for at least one of downlink and uplink in one or more cells of a plurality of cells, transmits at least one of a list of first cells for indication of one or more TCI states in the one or more TCI state lists and a list of second cells for reference to one of the one or more TCI state lists, and transmits the indication; and
a control section that indicates, by using at least one of the list of first cells and the list of second cells, application of the one or more TCI states to a part or all of the plurality of cells.
